# EUROPEAN PATENT SPECIFICATION

(11) **EP 3 156 691 B1**
(45) Date of publication and mention of the grant of the patent: **26.06.2019**
(21) Application number: 15190034.7
(22) Date of filing: 15.10.2015
(51) Int. Cl.: F16H 15/28, B62M 11/12, B62M 7/00, B62M 17/00, B62M 25/08

(54) **LINEAR GEAR SHIFT MECHANISM FOR CHAINLESS VEHICLE**
LINEARER GANGSCHALTUNGSMECHANISMUS FÜR KETTENLOSES FAHRZEUG
MÉCANISME DE CHANGEMENT DE VITESSE LINÉAIRE POUR VÉHICULE SANS CHAÎNE

(43) Date of publication of application: 19.04.2017
(73) Proprietor: Motive Power Industry Co., Ltd., Dacun Township, Changhua County 515 (TW)
(72) Inventor: CHENG, Hsin-Lin, 515 Dacun Township, (TW); TENG, Ching-Chung, 515 Dacun Township, (TW)
(74) Representative: Perani & Partners S.p.A.

(56) References cited:
- WO-A1-2013/109723
- US-A- 3 407 687
- US-A1- 2014 094 339

## Description

### FIELD OF THE INVENTION

The present invention relates to linear gear shift mechanisms for chainless vehicles and more particularly to a linear gear shift mechanism for chainless vehicles, which is structurally simple and compact, has a wide linear gear-changing range, incurs little transmission loss, and never jerks while shifting gear.

### BACKGROUND OF THE INVENTION

To adjust speed and tread easily, every tread-required means of transportation nowadays is equipped with a front gear, rear gear, chain and gear shift mechanism. However, the front gear, rear gear, chain and gear shift mechanism are structurally intricate and bulky, have a narrow gear-changing range, incur much transmission loss, and tend to jerk while shifting gear. Therefore, a stepless gear shift mechanism characterized by two grooved wheels operating in conjunction with a V-shaped belt is developed. However, the stepless gear shift mechanism has disadvantages, namely large volume of the grooved wheels and the V-shaped belt, and a narrow gear-changing range. Accordingly, the present invention aims to disclose a linear gear shift mechanism for chainless vehicles, such that the linear gear shift mechanism for chainless vehicles is structurally simple and compact, has a wide linear gear-changing range, incurs little transmission loss, and never jerks while shifting gear.

US 3407687 and WO 2013/109723 A1 each disclose a linear gear shift mechanism falling, in the opinion of the Examining Division of the European Patent Office, within the wording of the pre-characterizing portion of claim 1.

### SUMMARY OF THE INVENTION

In view of the aforesaid drawbacks of the prior art, the inventor of the present invention recognized room for improvement in the prior art and thus conducted extensive researches to therefore develop a linear gear shift mechanism for chainless vehicles, such that the linear gear shift mechanism for chainless vehicles is structurally simple and compact, has a wide linear gear-changing range, incurs little transmission loss, and never jerks while shifting gear.

The present invention provides a linear gear shift mechanism for chainless vehicles, comprising: a gear shift unit having a support rotator, a plurality of transmission balls and a plurality of driving posts, with the transmission balls spaced apart from each other and movably disposed on the support rotator, with a cylindrical receiving portion disposed on each said transmission ball along a radial direction thereof, wherein the driving posts have inward ends movably disposed in the cylindrical receiving portions, respectively, along a radial direction of the support rotator and rotate from the radial direction of the support rotator to but not reach an axial direction of the support rotator; an axial power input rotator having an inward-tilted power input annular surface and inputting power along the axial direction of the support rotator; an axial power output rotator having an inward-tilted power output annular surface and outputting power along the axial direction of the support rotator, wherein the transmission balls are movably clamped between the inward-tilted power input annular surface, the inward-tilted power output annular surface and the support rotator; a tread-required transverse power source for meshing with the axial power input rotator; wherein the tread-required transverse power source has a transverse power bevel gear, and the axial power input rotator has an axial power input bevel gear, such that the transverse power bevel gear meshes with the axial power input bevel gear; an axial power transfer portion for meshing with the axial power output rotator; wherein the axial power output rotator has an axial power output spur gear, and the axial power transfer portion has an axial power transfer spur gear, such that the axial power output spur gear meshes with the axial power transfer spur gear; and a transverse power output portion for meshing with the axial power transfer portion, wherein the transverse power output portion has a transverse power output bevel gear, and the axial power transfer portion has an axial power transfer bevel gear, such that the transverse power output bevel gear meshes with the axial power transfer bevel gear.

The linear gear shift mechanism for chainless vehicles further comprises an auxiliary power source for meshing with the tread-required transverse power source.

Regarding the linear gear shift mechanism for chainless vehicles, the auxiliary power source has an auxiliary power bevel gear, and the tread-required transverse power source has a transverse power bevel gear, such that the auxiliary power bevel gear meshes with the transverse power bevel gear.

Regarding the linear gear shift mechanism for chainless vehicles, the auxiliary power source is disposed along the radial direction of the support rotator or along the axial direction of the support rotator.

Regarding the linear gear shift mechanism for chainless vehicles, the axial power input rotator and the axial power output rotator are disposed on two opposite sides of the transmission balls, respectively, to movably clamp the transmission balls between the inward-tilted power input annular surface, the inward-tilted power output annular surface and an outer circumferential surface of the support rotator, with the cylindrical receiving portion being a cylindrical receiving recess, wherein the inward ends of the driving posts are movably disposed in the cylindrical receiving recesses, respectively, along the radial direction of the support rotator, wherein the gear shift unit has a driving ring, wherein outward ends of the driving posts are pivotally connected to the driving ring, and the driving ring moves along the axial direction of the support rotator.

Regarding the linear gear shift mechanism for chainless vehicles, the gear shift unit has a driving screw for penetrating and meshing with the driving ring and at least a guiding rod for movably penetrating the driving ring.

Regarding the linear gear shift mechanism for chainless vehicles, the gear shift unit has a driving ring and a limitator, with a plurality of oblique guide slots disposed on an inward annular surface of the driving ring, wherein the limitator has a plurality of axial limiting through holes surrounding an axis of the support rotator, wherein an axial guide opening and an axial curved guide slot are disposed on a radial outward side and a radial inward side of each axial limiting through hole, respectively, wherein the driving ring are movably disposed outside the limitator, wherein the transmission balls are movably confined to the axial limiting through holes, respectively, wherein two opposite sides of the transmission balls are exposed from two opposite sides of the axial limiting through holes, wherein the cylindrical receiving portions are each a cylindrical receiving channel, wherein the inward ends of the driving posts movably penetrate the cylindrical receiving channels along the radial direction of the support rotator so as to be movably disposed in the axial curved guide slots, respectively, wherein the outward ends of the driving posts are movably disposed in the oblique guide slots through the axial guide openings, respectively, wherein the axial power input rotator and the axial power output rotator are positioned on a same side of the transmission balls, wherein the support rotator is positioned beside the transmission balls in a manner to be opposite to the axial power input rotator and the axial power output rotator, such that the transmission balls are movably clamped between the inward-tilted power input annular surface, the inward-tilted power output annular surface and a lateral annular surface of the support rotator, thereby allowing the driving ring to rotate about the limitator by the axis of the support rotator.

Regarding the linear gear shift mechanism for chainless vehicles, the gear shift unit has a driving ring, and the cylindrical receiving portions are each a cylindrical receiving recess, wherein the inward ends of the driving posts are movably disposed in the cylindrical receiving recesses, respectively, along the radial direction of the support rotator, wherein the outward ends of the driving posts are pivotally connected to the driving ring, wherein the axial power input rotator and the axial power output rotator are positioned on a same side of the transmission balls, wherein the support rotator is positioned beside the transmission balls in a manner to be opposite to the axial power input rotator and the axial power output rotator, such that the transmission balls are movably clamped between the inward-tilted power input annular surface, the inward-tilted power output annular surface and a lateral annular surface of the support rotator, thereby allowing the driving ring to move along the axial direction of the support rotator.

The linear gear shift mechanism for chainless vehicles further comprises a spur gear whereby the axial power output spur gear meshes with the axial power transfer spur gear.

Therefore, the linear gear shift mechanism for chainless vehicles according to the present invention is structurally simple and compact, has a wide linear gear-changing range, incurs little transmission loss, and never jerks while shifting gear.

### BRIEF DESCRIPTION OF THE DRAWINGS

Objectives, features, and advantages of the present invention are hereunder illustrated with specific embodiments in conjunction with the accompanying drawings, in which:
FIG. 1 is an exploded view of a preferred embodiment of the present invention;
FIG. 2 is an exploded view of a preferred embodiment of the present invention from another angle of view;
FIG. 3 is an exploded view of an axial power input rotator, gear shift unit and axial power output rotator according to a preferred embodiment of the present invention;
FIG. 4 is an exploded view of the axial power input rotator, gear shift unit and axial power output rotator according to a preferred embodiment of the present invention from another angle of view;
FIG. 5 is a cross-sectional schematic view of the gear shift unit according to a preferred embodiment of the present invention;
FIG. 6 is an exploded view of another axial power input rotator, gear shift unit and axial power output rotator according to a preferred embodiment of the present invention;
FIG. 7 is an exploded view of another axial power input rotator, gear shift unit and axial power output rotator according to a preferred embodiment of the present invention from another angle of view;
FIG. 8 is an assembled schematic view of another axial power input rotator, gear shift unit and axial power output rotator according to a preferred embodiment of the present invention;
FIG. 9 is an assembled schematic view of another axial power input rotator, gear shift unit and axial power output rotator according to a preferred embodiment of the present invention from another angle of view;
FIG. 10 is a cross-sectional schematic view of another gear shift unit according to a preferred embodiment of the present invention;
FIG. 11 is an assembled schematic view of a preferred embodiment of the present invention;
FIG. 12 is an assembled schematic view of a preferred embodiment of the present invention from another angle of view;
FIG. 13 is an assembled schematic view of a preferred embodiment of the present invention from yet another angle of view;
FIG. 14 is an assembled schematic view of a preferred embodiment of the present invention from yet another angle of view; and
FIG. 15 is a schematic view of an auxiliary power source horizontally disposed according to a preferred embodiment of the present invention.

### DETAILED DESCRIPTION OF THE PREFERRED EMBODIMENTS

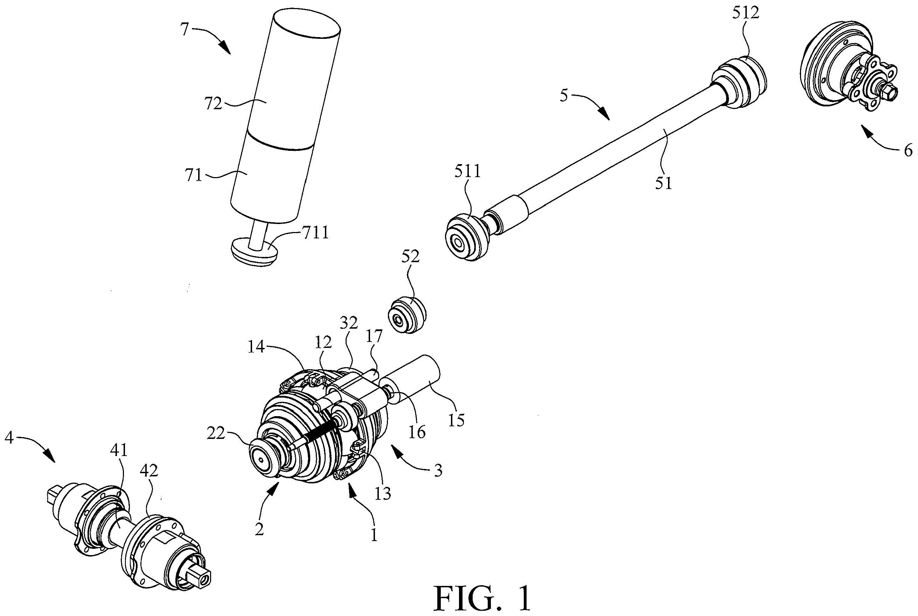

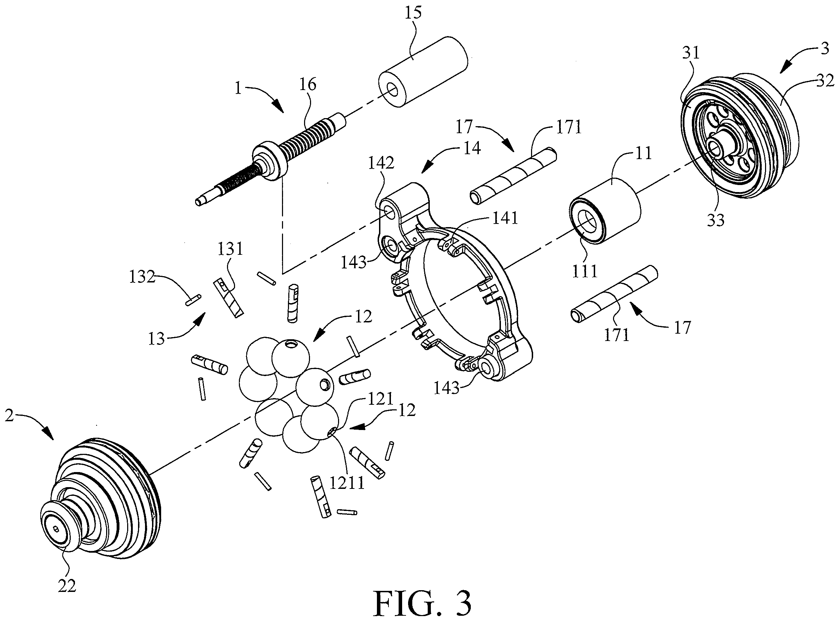

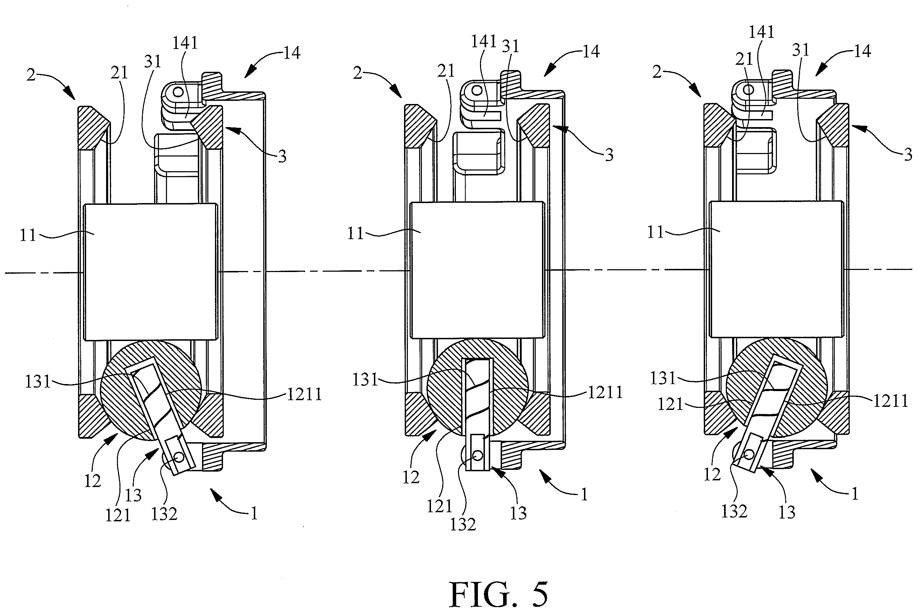

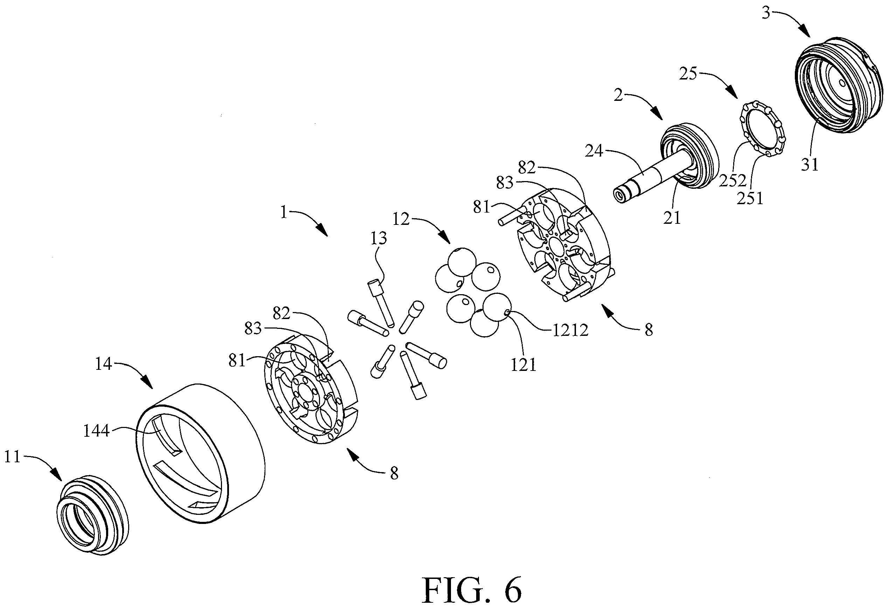

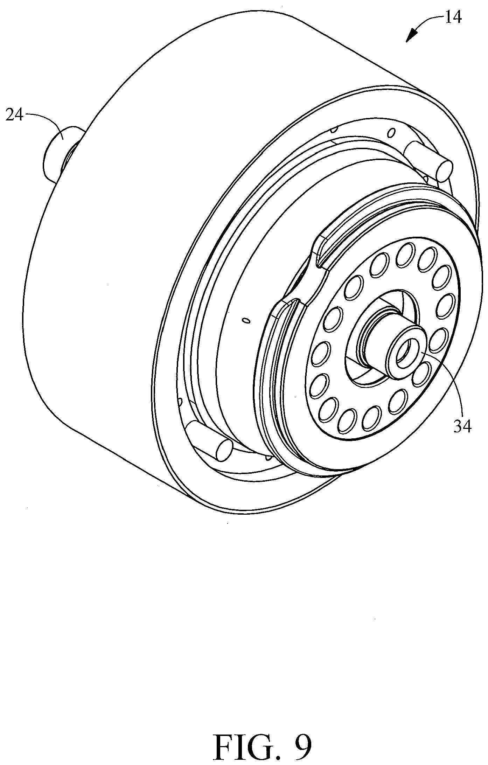

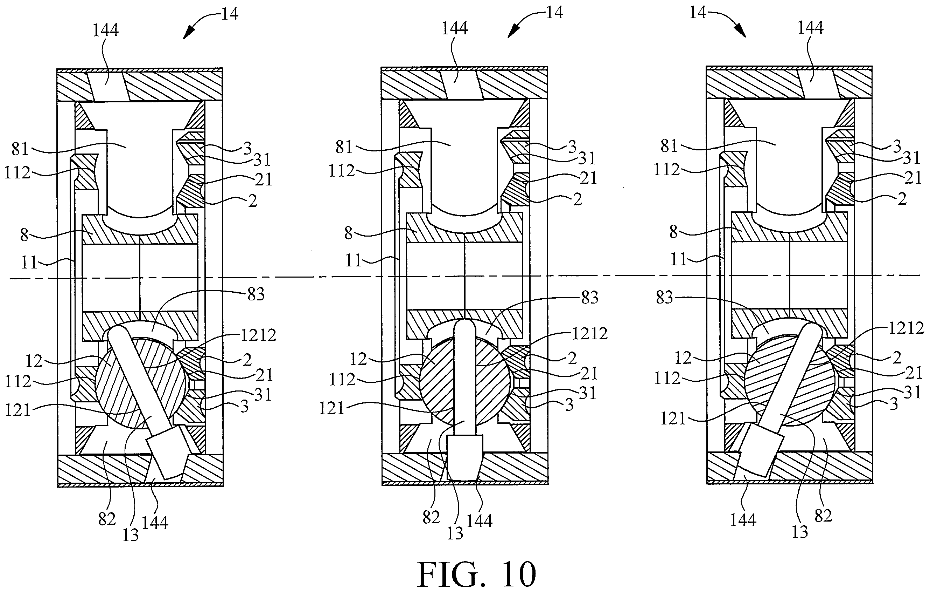

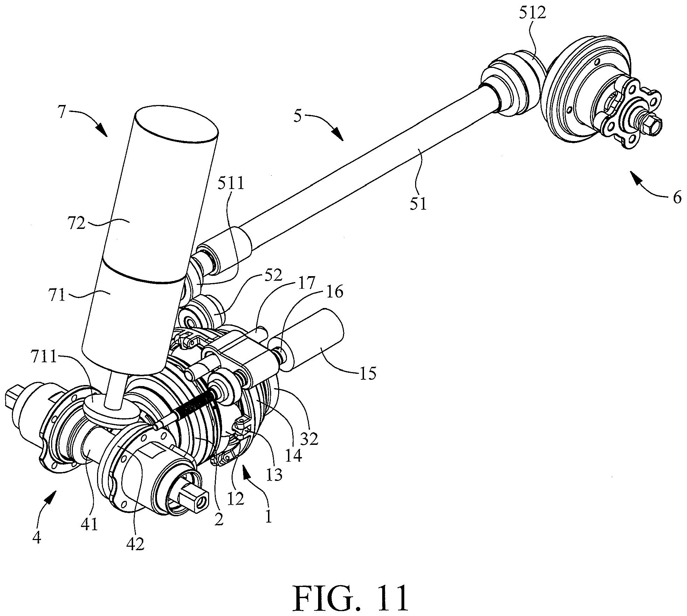

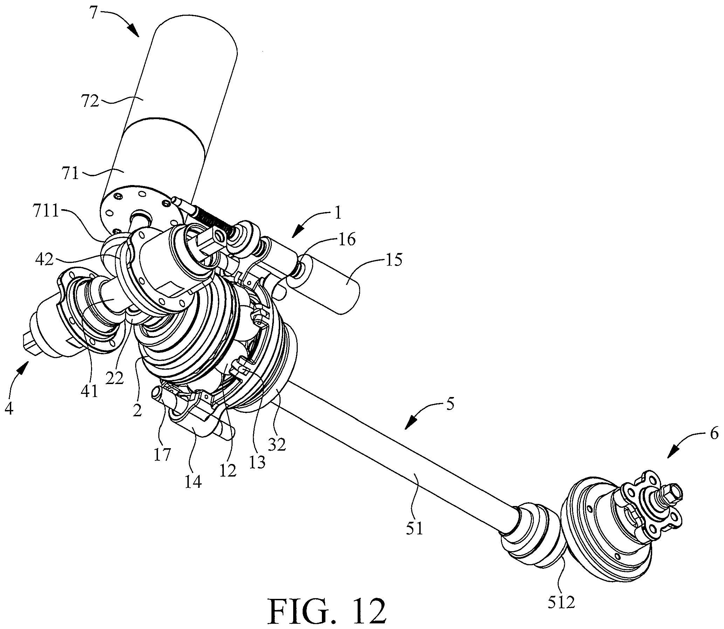

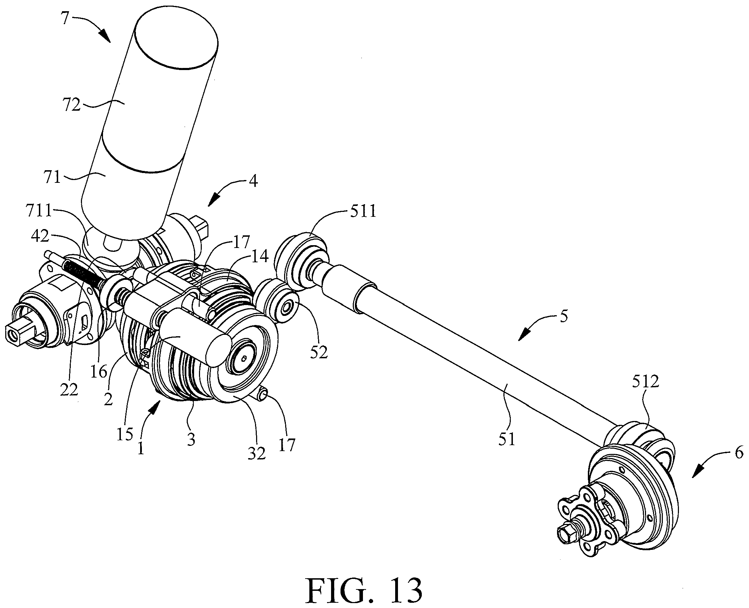

Referring to FIG. 1 through FIG. 14, to illustrate how transmission balls 12 and driving posts 13 operate, FIG. 5 and FIG. 10 show only how a transmission ball 12 and a driving post 13 operate, because the other transmission balls and driving posts also operate in the way shown in FIG. 5 and FIG. 10. The present invention provides a linear gear shift mechanism for chainless vehicles, which comprises a gear shift unit 1, an axial power input rotator 2, an axial power output rotator 3, a tread-required transverse power source 4, an axial power transfer portion 5 and a transverse power output portion 6. The gear shift unit 1 has a support rotator 11, a plurality of transmission balls 12 and a plurality of driving posts 13. The transmission balls 12 are spaced apart from each other by the same angle of circumference and movably disposed on the outer circumferential surface (shown in FIG. 5) or a lateral annular surface 112 (shown in FIG. 10) of the support rotator 11. The lateral annular surface 112 is concaved and curved to thereby operate in conjunction with the transmission balls 12. A cylindrical receiving portion 121 is disposed on each transmission ball 12 along the radial direction thereof. The inward ends of the driving posts 13 are movably disposed in the cylindrical receiving portions 121, respectively, along the radial direction of the support rotator 11. A first oil-guiding groove 131 is disposed on the circumferential surface of each driving post 13, such that a lubricant can be disposed between the driving posts 13 and the transmission balls 12 to reduce friction-induced loss. Referring to FIG. 5, the driving posts 13 rotate clockwise or counterclockwise from the radial direction of the support rotator 11 to but not reach the axial direction of the support rotator 11, so as to drive the transmission balls 12 to rotate clockwise or rotate counterclockwise, so do the other driving posts and transmission balls not shown. Referring to FIG. 3 through FIG. 5, the axial power input rotator 2 is laterally provided with an inward-tilted power input annular surface 21 and a first connection shaft 23, and the axial power input rotator 2 inputs power along the axial direction of the support rotator 11, wherein the first connection shaft 23 of the axial power input rotator 2 is pivotally connected to a bearing 111 disposed beside the support rotator 11. Referring to FIG. 6 through FIG. 10, the axial power input rotator 2 is laterally provided with an inward-tilted power input annular surface 21 and an axial power input shaft 24, and the axial power input rotator 2 inputs power along the axial direction of the support rotator 11, wherein an axial power input shaft 24 of the axial power input rotator 2 penetrates the support rotator 11. Referring to FIG. 3 through FIG. 5, the axial power output rotator 3 is laterally provided with an inward-tilted power output annular surface 31 and a second connection shaft 33, and the axial power output rotator 3 outputs power along the axial direction of the support rotator 11, wherein the second connection shaft 33 of the axial power output rotator 3 is pivotally connected to another bearing 111 disposed on the other side of the support rotator 11. Referring to FIG. 6 through FIG. 10, the axial power output rotator 3 is provided with and flanked by an inward-tilted power output annular surface 31 and an axial power output shaft 34, wherein the axial power output rotator 3 outputs power along the axial direction of the support rotator 11. Referring to FIG. 5, the transmission balls 12 are movably clamped between the inward-tilted power input annular surface 21, the inward-tilted power output annular surface 31 and the outer circumferential surface of the support rotator 11, so are the other transmission balls not shown, wherein the axial power input rotator 2 and the axial power output rotator 3 rotate in opposite directions. Referring to FIG. 10, the transmission balls 12 are movably clamped between the inward-tilted power input annular surface 21, the inward-tilted power output annular surface 31 and the lateral annular surface 112 of the support rotator 11, so are the other transmission balls not shown, wherein the axial power input rotator 2 and the axial power output rotator 3 rotate in the same direction. The tread-required transverse power source 4 meshes with the axial power input rotator 2 along the radial direction of the support rotator 11, wherein the tread-required transverse power source 4 is attributed to a power produced as a result of a tread carried out by a human being. The axial power transfer portion 5 meshes with the axial power output rotator 3 along the axial direction of the support rotator 11 and transfers power along the axial direction of the support rotator 11. The transverse power output portion 6 meshes with the axial power transfer portion 5 along the radial direction of the support rotator 11. Therefore, the axial power transfer portion 5 transfers the power from the tread-required transverse power source 4 to the transverse power output portion 6, thereby dispensing with any chain.

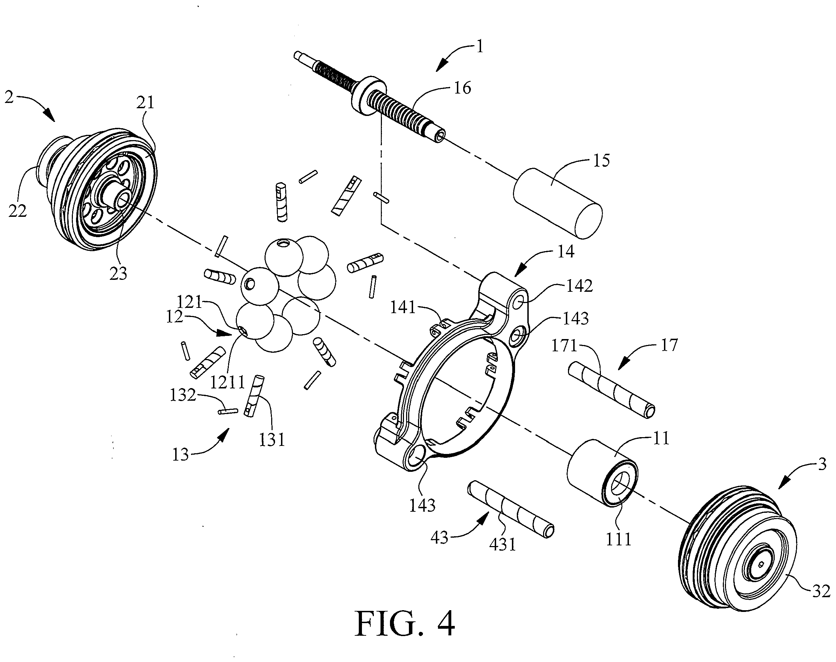

Referring to FIG. 1 and FIG. 3, treading the tread-required transverse power source 4 clockwise and thus rotating the axial power input rotator 2 clockwise causes the transmission balls 12 to be driven by the inward-tilted power input annular surface 21 (shown in FIG. 4) of the axial power input rotator 2 to rotate counterclockwise and causes the inward-tilted power output annular surface 31 of the axial power output rotator 3 and the axial power output rotator 3 to be driven by the transmission balls 12 to rotate counterclockwise. Treading the tread-required transverse power source 4 counterclockwise and thus rotating the axial power input rotator 2 counterclockwise causes the transmission balls 12 to be driven by the inward-tilted power input annular surface 21 (shown in FIG. 4) of the axial power input rotator 2 to rotate clockwise and causes the inward-tilted power output annular surface 31 of the axial power output rotator 3 and the axial power output rotator 3 to be driven by the transmission balls 12 to rotate clockwise.

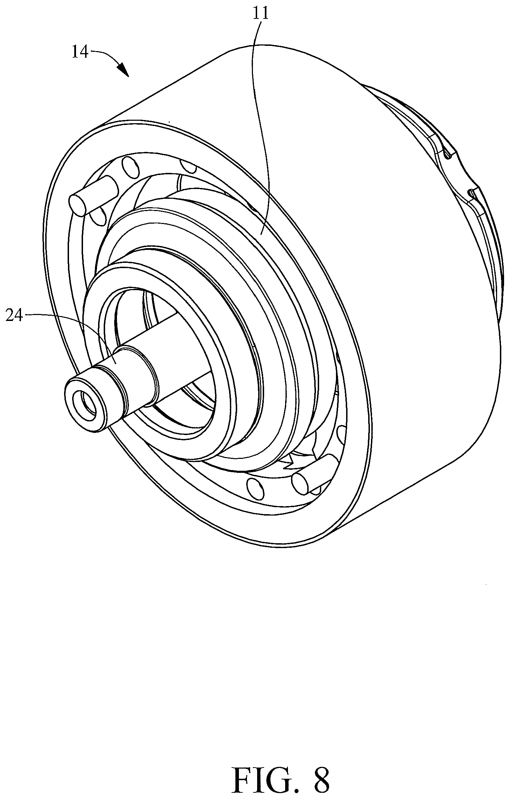

Referring to FIG. 1, FIG. 6 and FIG. 8, the axial power input rotator, gear shift unit and axial power output rotator of FIG. 1 are equivalent to another axial power input rotator, gear shift unit and axial power output rotator of FIG. 6 and FIG. 8, respectively, whereas the axial power input bevel gear 22 of FIG. 1 is equivalent to the axial power input shaft 24 of FIG. 6 and FIG. 8. Treading the tread-required transverse power source 4 clockwise and thus rotating the axial power input rotator 2 clockwise causes the transmission balls 12 to be driven by the inward-tilted power input annular surface 21 of the axial power input rotator 2 to rotate clockwise and causes the inward-tilted power output annular surface 31 of the axial power output rotator 3 and the axial power output rotator 3 to be driven by the transmission balls 12 to rotate clockwise. Treading the tread-required transverse power source 4 counterclockwise and thus rotating the axial power input rotator 2 counterclockwise causes the transmission balls 12 to be driven by the inward-tilted power input annular surface 21 of the axial power input rotator 2 to rotate counterclockwise and causes the inward-tilted power output annular surface 31 of the axial power output rotator 3 and the axial power output rotator 3 to be driven by the transmission balls 12 to rotate counterclockwise.

Referring to the middle diagram through the leftmost diagram of FIG. 5, when the driving posts 13 rotate counterclockwise along the radial direction of the support rotator 11, the transmission balls 12 turn about the driving posts 13; meanwhile, the inward-tilted power input annular surface 21 of the axial power input rotator 2 comes into contact with the large circumference of the transmission balls 12, and the inward-tilted power output annular surface 31 of the axial power output rotator 3 comes into contact with the small circumference of the transmission balls 12, thereby allowing the axial power input rotator 2 to be of a higher speed than the axial power output rotator 3. Hence, the linear gear shift mechanism of the present invention effectuates a labor-saving tread and deceleration whenever the driving posts 13 rotate counterclockwise along the radial direction of the support rotator 11. Referring to the middle diagram through the rightmost diagram of FIG. 5, when the driving posts 13 rotate clockwise along the radial direction of the support rotator 11, the transmission balls 12 turn about the driving posts 13; meanwhile, the inward-tilted power input annular surface 21 of the axial power input rotator 2 comes into contact with the small circumference of the transmission balls 12, and the inward-tilted power output annular surface 31 of the axial power output rotator 3 comes into contact with the large circumference of the transmission balls 12, thereby allowing the axial power input rotator 2 to be of a lower speed than the axial power output rotator 3. Hence, the linear gear shift mechanism of the present invention effectuates a labor-consuming tread and acceleration whenever the driving posts 13 rotate clockwise along the radial direction of the support rotator 11. The operation of a driving post 13 and a transmission ball 12 is described above. The other driving posts and transmission balls also operate in the aforesaid manner.

Referring to the middle diagram through the leftmost diagram of FIG. 10, when the driving posts 13 rotate counterclockwise along the radial direction of the support rotator 11, the transmission balls 12 turn about the driving posts 13; meanwhile, the inward-tilted power input annular surface 21 of the axial power input rotator 2 comes into contact with the large circumference of the transmission balls 12, and the inward-tilted power output annular surface 31 of the axial power output rotator 3 comes into contact with the small circumference of the transmission balls 12, thereby allowing the axial power input rotator 2 to be of a higher speed than the axial power output rotator 3. Hence, the linear gear shift mechanism of the present invention effectuates a labor-saving tread and deceleration whenever the driving posts 13 rotate counterclockwise along the radial direction of the support rotator 11. Referring to the middle diagram through the rightmost diagram of FIG. 10, when the driving posts 13 rotate clockwise along the radial direction of the support rotator 11, the transmission balls 12 turn about the driving posts 13; meanwhile, the inward-tilted power input annular surface 21 of the axial power input rotator 2 comes into contact with the small circumference of the transmission balls 12, and the inward-tilted power output annular surface 31 of the axial power output rotator 3 comes into contact with the large circumference of the transmission balls 12, thereby allowing the axial power input rotator 2 to be of a lower speed than the axial power output rotator 3. Hence, the linear gear shift mechanism of the present invention effectuates a labor-consuming tread and acceleration whenever the driving posts 13 rotate clockwise along the radial direction of the support rotator 11. The operation of a driving post 13 and a transmission ball 12 is described above. The other driving posts and transmission balls also operate in the aforesaid manner.

Referring to FIG. 5, the larger the distance between the axial power input rotator 2 and the axial power output rotator 3, the larger the angle by which the driving posts 13 can rotate along the radial direction of the support rotator 11. Hence, the linear gear shift mechanism of the present invention is not only structurally simple and compact but also has a wide linear gear-changing range. Furthermore, to enable the linear gear shift mechanism of the present invention to change gear efficiently, the transmission balls 12 come into contact with the inward-tilted power input annular surface 21, the inward-tilted power output annular surface 31 and the outer circumferential surface of the support rotator 11 smoothly. Therefore, the linear gear shift mechanism of the present invention incurs little transmission loss and never jerks while shifting gear.

Referring to FIG. 10, the larger the distance between the axial power input rotator 2, the axial power output rotator 3 and the support rotator 11, the larger the angle by which the driving posts 13 can rotate along the radial direction of the support rotator 11. Hence, the linear gear shift mechanism of the present invention is not only structurally simple and compact but also has a wide linear gear-changing range. Furthermore, to enable the linear gear shift mechanism of the present invention to change gear efficiently, the transmission balls 12 come into contact with the inward-tilted power input annular surface 21, the inward-tilted power output annular surface 31 and the lateral annular surface 112 of the support rotator 11 smoothly. Therefore, the linear gear shift mechanism of the present invention incurs little transmission loss and never jerks while shifting gear.

Referring to FIG. 1, FIG. 2 and FIG. 11 through FIG. 15, the linear gear shift mechanism for chainless vehicles further comprises an auxiliary power source 7 which meshes with the tread-required transverse power source 4, so as for the auxiliary the tread-required transverse power source 4 to supply additional auxiliary power. Therefore, according to the present invention, the linear gear shift mechanism for chainless vehicles saves labor through the use of the auxiliary power source 7. Furthermore, the aforesaid technique also applies to another axial power input rotator, gear shift unit and axial power output rotator shown in FIG. 6 through FIG. 10.

Referring to FIG. 1, FIG. 2 and FIG. 11 through FIG. 15, regarding the linear gear shift mechanism for chainless vehicles, the auxiliary power source 7 has an auxiliary motor 71 and a battery 72. The auxiliary motor 71 has an auxiliary power bevel gear 711. The battery 72 and the auxiliary motor 71 are connected in series. The tread-required transverse power source 4 has a crankshaft 41 and a transverse power bevel gear 42. The crankshaft 41 penetrates and connects with the transverse power bevel gear 42. Each of the two ends of the crankshaft 41 is connected to a pedal crank (not shown). The auxiliary power bevel gear 711 meshes with the transverse power bevel gear 42. Therefore, the auxiliary power source 7 is disposed in the radial direction of the tread-required transverse power source 4. Furthermore, the aforesaid technique also applies to another axial power input rotator, gear shift unit and axial power output rotator shown in FIG. 6 through FIG. 10.

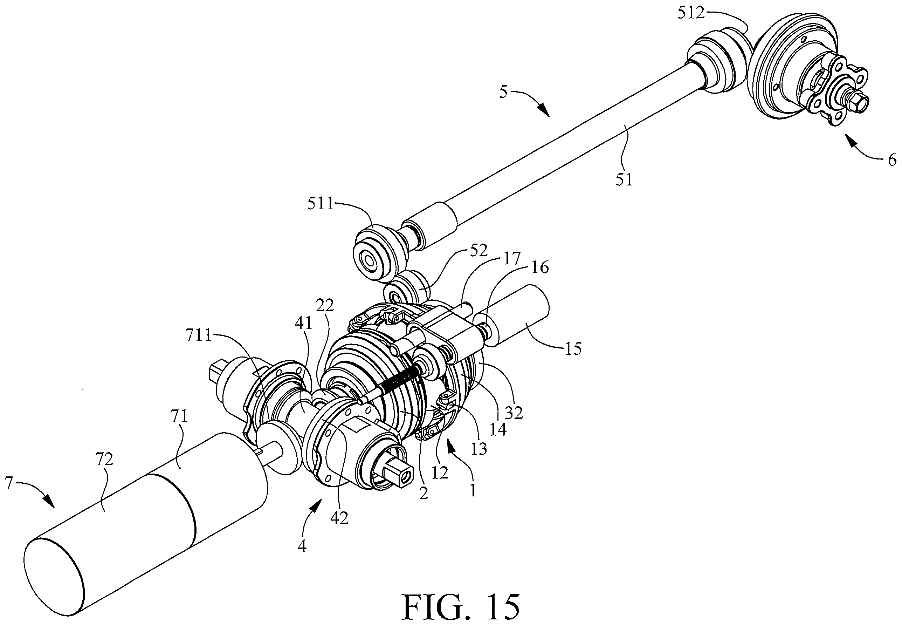

Referring to FIG. 1 through FIG. 3 and FIG. 11 through FIG. 15, regarding the linear gear shift mechanism for chainless vehicles, the auxiliary power source 7 is disposed in the radial direction of the support rotator 11, or the auxiliary power source 7 is disposed in the axial direction of the support rotator 11 (shown in FIG. 3 and FIG. 15). Therefore, the auxiliary power source 7 is coupled to the chassis of a chainless vehicle according to the chassis structure of the chainless vehicle. Furthermore, the aforesaid technique also applies to another axial power input rotator, gear shift unit and axial power output rotator shown in FIG. 6 through FIG. 10.

Referring to FIG. 3 through FIG. 5, regarding the linear gear shift mechanism for chainless vehicles, the axial power input rotator 2 and the axial power output rotator 3 are disposed on the two opposite sides of the transmission balls 12 to movably clamp the transmission balls 12 between the inward-tilted power input annular surface 21, the inward-tilted power output annular surface 31 and the outer circumferential surface of the support rotator 11. The cylindrical receiving portion 121 is a cylindrical receiving recess 1211. The inward ends of the driving posts 13 are movably disposed in the cylindrical receiving recesses 1211, respectively, along the radial direction of the support rotator 11. The gear shift unit 1 has a driving ring 14. The outward ends of the driving posts 13 are exposed from the transmission balls 12, respectively, and pivotally connected to a pivotal slot 141 of the driving ring 14 through a pivotal shaft 132. The driving ring 14 moves along the axial direction of the support rotator 11, such that the driving ring 14 drives the driving posts 13 and the transmission balls 12 to rotate clockwise or rotate counterclockwise, thereby allowing the linear gear shift mechanism of the present invention to change gear.

Referring to FIG. 3 and FIG. 4, regarding the linear gear shift mechanism for chainless vehicles, the gear shift unit 1 has a driving screw 16 and at least one guiding rod 17. The driving screw 16 penetrates and meshes with a threaded hole 142 of the driving ring 14. The driving screw 14 is driven with a driving motor 15 to rotate, such that the driving ring 14 moves along the axial direction of the support rotator 11. The guiding rod 17 movably penetrates a guide hole 143 of the driving ring 14. The guiding rod 17 is a post. The guiding rod 17 is provided in the plural and arranged symmetrically, such that the driving ring 14 moves in a balanced manner while being driven by the driving screw 16 to undergo translation. A second oil-guiding groove 171 is disposed on the circumferential surface of the guiding rod 17, such that a lubricant can be disposed between the guiding rod 17 and the driving ring 14 to reduce transmission loss.

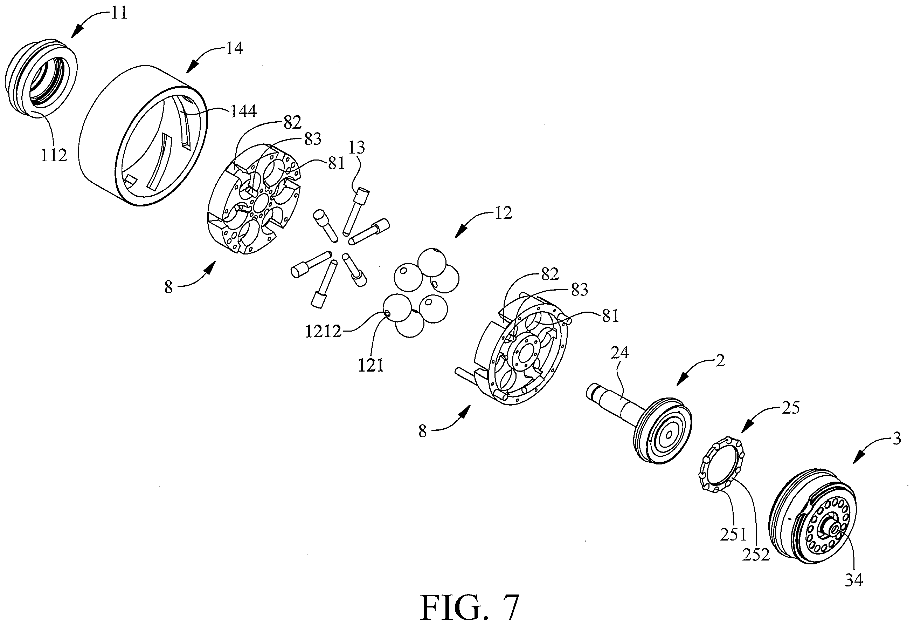

Referring to FIG. 6 through FIG. 10, regarding the linear gear shift mechanism for chainless vehicles, the gear shift unit 1 has a driving ring 14 and a limitator 8. As shown in FIG. 6 and FIG. 7, the limitator 8 is divided into halves, whereas the axial limiting through holes 81, the axial guide opening 82 and the axial curved guide slots 83 of the limitator 8 are each divided into halves. The inward annular surface of the driving ring 14 has a plurality of oblique guide slots 144. The limitator 8 has a plurality of axial limiting through holes 81 arranged in a manner to surround the axis of the support rotator 11. An axial guide opening 82 is disposed on the radial outward side of each axial limiting through hole 81. An axial curved guide slot 83 is disposed on the radial inward side of each axial limiting through hole 81. The driving ring 14 is movably disposed outside the limitator 8. The transmission balls 12 are movably confined to the axial limiting through holes 81, respectively. The two opposite sides of the transmission balls 12 are exposed from the two opposite sides of the axial limiting through holes 81. The cylindrical receiving portions 121 are each a cylindrical receiving channel 1212. The inward ends of the driving posts 13 movably penetrate the cylindrical receiving channels 1212 along the radial direction of support rotator 11 and thus are movably disposed in the axial curved guide slots 83, respectively. The outward ends of the driving posts 13 are movably disposed in the oblique guide slots 144 through the axial guide openings 82, respectively. The inward-tilted power input annular surface 21 of the axial power input rotator 2 is positioned inward to the inward-tilted power output annular surface 31 of the axial power output rotator 3, and both the axial power input rotator 2 and the axial power output rotator 3 are positioned on the same side of the transmission balls 12. The support rotator 11 is positioned beside the transmission balls 12 in a manner to be opposite to the axial power input rotator 2 and the axial power output rotator 3. Hence, the transmission balls 12 are movably clamped between the inward-tilted power input annular surface 21, the inward-tilted power output annular surface 31 and the lateral annular surface 112 of the support rotator 11. The driving ring 14 rotates about the limitator 8 by the axis of the support rotator 11. Since the two ends of each driving post 13 are guided by the axial guide opening 82 and the axial curved guide slot 83, respectively, the two ends of the driving post 13 can only move in the axial direction of the support rotator 11; afterward, when the driving ring 14 starts to rotate about the limitator 8, the outward ends of the driving posts 13 are guided to move rightward (as shown in the middle diagram through the leftmost diagram of FIG. 10) or leftward (as shown in the middle diagram through the rightmost diagram of FIG. 10) by the oblique guide slots 144 of the driving ring 14, so as to cause the driving posts 13 and the transmission balls 12 to simultaneously rotate counterclockwise (as shown in the middle diagram through the leftmost diagram of FIG. 10) or simultaneously rotate clockwise (as shown in the middle diagram through the rightmost diagram of FIG. 10), thereby enabling the linear gear shift mechanism for chainless vehicles to change gear. Furthermore, the linear gear shift mechanism for chainless vehicles further comprises a ball ring 25. The ball ring 25 has a plurality of balls 251 and a positioning ring 252. The balls 251 are spaced apart from each other and movably positioned in a plurality of positioning recesses of the positioning ring 252. The balls 251 are movably clamped between the axial power input rotator 2 and the axial power output rotator 3 to reduce the friction-induced loss incurred between the axial power input rotator 2 and the axial power output rotator 3.

Referring to FIG. 6, FIG. 7 and FIG. 10 as well as FIG. 3 through FIG. 5, regarding the linear gear shift mechanism for chainless vehicles, the gear shift unit 1 shown in FIG. 6, FIG. 7 and FIG. 10 can be identical to the gear shift unit 1 shown in FIG. 3 through FIG. 5 and thus has the driving ring 14 shown in FIG. 3 through FIG. 5. Similarly, the cylindrical receiving portions 121 shown in FIG. 6, FIG. 7 and FIG. 10 can be identical to the cylindrical receiving portions 121 shown in FIG. 3 through FIG. 5 and thus are each a cylindrical receiving recess 1211. The inward ends of the driving posts 13 are movably disposed in the cylindrical receiving recesses 1211, respectively, along the radial direction of the support rotator 11 shown in FIG. 6, FIG. 7 and FIG. 10. The outward ends of the driving posts 13 are pivotally connected to the driving ring 14. Referring to FIG. 6 through FIG. 10, the inward-tilted power input annular surface 21 of the axial power input rotator 2 is positioned inward to the inward-tilted power output annular surface 31 of the axial power output rotator 3, and both the axial power input rotator 2 and the axial power output rotator 3 are positioned on the same side of the transmission balls 12. The support rotator 11 is positioned beside the transmission balls 12 in a manner to be opposite to the axial power input rotator 2 and the axial power output rotator 3. Hence, the transmission balls 12 are movably clamped between the inward-tilted power input annular surface 21, the inward-tilted power output annular surface 31 and the lateral annular surface 112 of the support rotator 11. Like the driving ring 14 shown in FIG. 3 through FIG. 5, the driving ring 14 shown in FIG. 6, FIG. 7 and FIG. 10 moves along the axial direction of the support rotator 11 shown in FIG. 6, FIG. 7 and FIG. 10, thereby allowing the linear gear shift mechanism of the present invention to change gear. Similarly, the driving ring 14 shown in FIG. 6, FIG. 7 and FIG. 10 also operates in conjunction with the driving screw 16, driving motor 15 and guiding rod 17 shown in FIG. 3 and FIG. 4, such that the driving screw 16 drives the driving ring 14 to undergo translation along the axial direction of the guiding rod 17 and the support rotator 11.

Referring to FIG. 1, FIG. 2 and FIG. 12, regarding the linear gear shift mechanism for chainless vehicles, the axial power input rotator 2 has an axial power input bevel gear 22, such that the transverse power bevel gear 42 of the tread-required transverse power source 4 meshes with the axial power input bevel gear 22. Therefore, the axial power input rotator 2, the gear shift unit 1 and the axial power output rotator 3 are arranged in the radial direction of the tread-required transverse power source 4. Furthermore, the aforesaid technique also applies to another axial power input rotator, gear shift unit and axial power output rotator shown in FIG. 6 through FIG. 10, and the axial power input bevel gear 22 is disposed at the axial power input shaft 24.

Referring to FIG. 1, FIG. 2, FIG. 13 and FIG. 14, regarding the linear gear shift mechanism for chainless vehicles, the axial power output rotator 3 has an axial power output spur gear 32, whereas the axial power transfer portion 5 has an axial power transfer spur gear 511 and a transmission shaft 51. The axial power transfer spur gear 511 is connected to one end of the transmission shaft 51. The axial power output spur gear 32 meshes with the axial power transfer spur gear 511. Therefore, power of the tread-required transverse power source 4 is transferred along the axial direction of the axial power output rotator 3. Furthermore, the aforesaid technique also applies to another axial power input rotator, gear shift unit and axial power output rotator shown in FIG. 6 through FIG. 10, and the axial power output spur gear 32 is disposed at the axial power output shaft 34.

Referring to FIG. 1, FIG. 2, FIG. 13 and FIG. 14, the linear gear shift mechanism for chainless vehicles further comprises a spur gear 52, such that the axial power output spur gear 32 meshes with the axial power transfer spur gear 511 through the spur gear 52. Therefore, the spur gear 52 enables the axial power output rotator 3 to change the direction in which a subsequent mechanism rotates. Furthermore, the aforesaid technique also applies to another axial power input rotator, gear shift unit and axial power output rotator shown in FIG. 6 through FIG. 10.

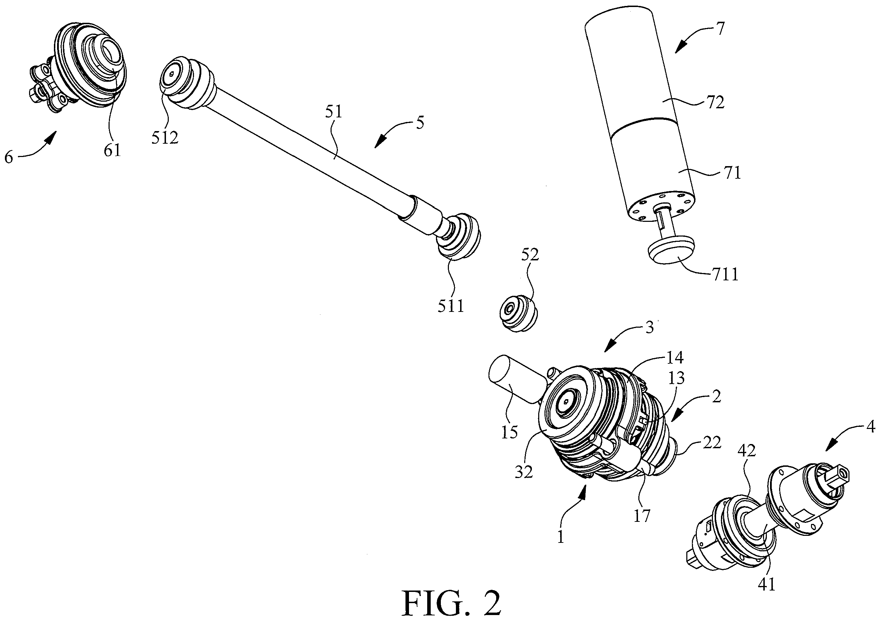

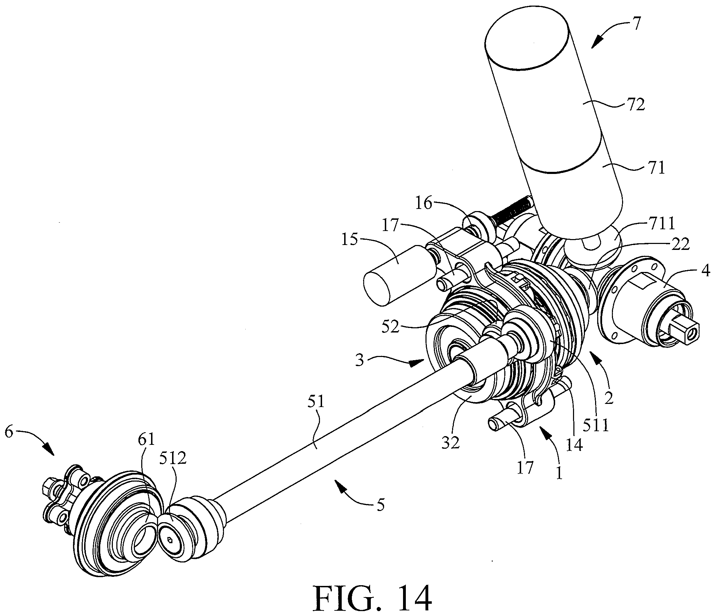

Referring to FIG. 2 and FIG. 14, regarding the linear gear shift mechanism for chainless vehicles, the transverse power output portion 6 has a transverse power output bevel gear 61. The transverse power output portion 6 can be connected to a wheel (not shown). The axial power transfer portion 5 has an axial power transfer bevel gear 512. The axial power transfer bevel gear 512 is connected to the other end of the transmission shaft 51. The transverse power output bevel gear 61 meshes with the axial power transfer bevel gear 512. Therefore, power of the axial power transfer portion 5 can be diverted and transferred to the transverse power output portion 6. Furthermore, the aforesaid technique also applies to another axial power input rotator, gear shift unit, and axial power output rotator shown in FIG. 6 through FIG. 10.

Referring to FIG. 1, FIG. 3 and FIG. 11, treading the tread-required transverse power source 4 clockwise and thus rotating the axial power input rotator 2 clockwise causes the transmission balls 12 to be driven by the inward-tilted power input annular surface 21 of the axial power input rotator 2 (shown in FIG. 4) to rotate counterclockwise and causes the inward-tilted power output annular surface 31 of the axial power output rotator 3, the axial power output rotator 3 and the axial power output spur gear 32 to be driven by the transmission balls 12 to rotate counterclockwise. Then, the axial power output spur gear 32 drives the spur gear 52 to rotate clockwise and drives the axial power transfer spur gear 511, the transmission shaft 51 and the axial power transfer bevel gear 512 to rotate counterclockwise. Eventually, the transverse power output bevel gear 61 of the transverse power output portion 6 is driven by the axial power transfer bevel gear 512 to rotate clockwise. Treading the tread-required transverse power source 4 counterclockwise and thus rotating the axial power input rotator 2 counterclockwise causes the transmission balls 12 to be driven by the inward-tilted power input annular surface 21 of the axial power input rotator 2 (shown in FIG. 4) to rotate clockwise and causes the inward-tilted power output annular surface 31 of the axial power output rotator 3, the axial power output rotator 3 and the axial power output spur gear 32 to be driven by the transmission balls 12 to rotate clockwise. Then, the axial power output spur gear 32 drives the spur gear 52 to rotate counterclockwise and drives the axial power transfer spur gear 511, the transmission shaft 51 and the axial power transfer bevel gear 512 to rotate clockwise. Eventually, the transverse power output bevel gear 61 of the transverse power output portion 6 is driven by the axial power transfer bevel gear 512 to rotate counterclockwise. Therefore, according to the present invention, the linear gear shift mechanism for chainless vehicles is characterized in that the transverse power output portion 6 rotates together with the tread-required transverse power source 4 in the same direction, thereby dispensing with any chain. Furthermore, since the axial power input shaft 24 of the gear shift unit 1 shown in FIG. 6 through FIG. 10 and the axial power output shaft 34 rotate in the same direction, the gear shift unit 1 shown in FIG. 6 through FIG. 10 enables the transverse power output portion 6 to rotate together with the tread-required transverse power source 4 in the same direction without any chain and the spur gear 52.

## Claims

1. A linear gear shift mechanism for chainless vehicles, comprising:
a gear shift unit (1) having a support rotator (11), a plurality of transmission balls (12) and a plurality of driving posts (13), with the transmission balls (12) spaced apart from each other and movably disposed on the support rotator (11), with a cylindrical receiving portion (121) disposed on each said transmission ball (12) along a radial direction thereof, wherein the driving posts (13) rotate from the radial direction of the support rotator (11) to but not reach an axial direction of the support rotator (11); **characterized in that**
the driving posts (13) have inward ends movably disposed in the cylindrical receiving portions (121), respectively, along a radial direction of the support rotator (11);
an axial power input rotator (2) having an inward-tilted power input annular surface (21) and inputting power along the axial direction of the support rotator (11);
an axial power output rotator (3) having an inward-tilted power input annular surface (31) and outputting power along the axial direction of the support rotator (11), wherein the transmission balls (12) are movably clamped between the inward-tilted power input annular surface (21), the inward-tilted power input annular surface (31) and the support rotator (11);
a tread-required transverse power source (4) for meshing with the axial power input rotator (2), wherein the tread-required transverse power source (4) has a transverse power bevel gear (42), and the axial power input rotator (2) has an axial power input bevel gear (22), such that the transverse power bevel gear (42) meshes with the axial power input bevel gear (22);
an axial power transfer portion (5) for meshing with the axial power output rotator (3), wherein the axial power output rotator (3) has an axial power output spur gear (32), and the axial power transfer portion (5) has an axial power transfer spur gear (511), such that the axial power output spur gear (32) meshes with the axial power transfer spur gear (511); and
a transverse power output portion (6) for meshing with the axial power transfer portion (5), wherein the transverse power output portion (6) has a transverse power output bevel gear (61), and the axial power transfer portion (5) has an axial power transfer bevel gear (512), such that the transverse power output bevel gear (61) meshes with the axial power transfer bevel gear (512).

2. The linear gear shift mechanism for chainless vehicles of claim 1, further comprising an auxiliary power source (7) for meshing with the tread-required transverse power source (4).

3. The linear gear shift mechanism for chainless vehicles of claim 2, wherein the auxiliary power source (7) has an auxiliary power bevel gear (711), and the tread-required transverse power source (4) has a transverse power bevel gear (42), such that the auxiliary power bevel gear (711) meshes with the transverse power bevel gear (42).

4. The linear gear shift mechanism for chainless vehicles of claim 2, wherein the auxiliary power source (7) is disposed along one of the radial direction and the axial direction of the support rotator (11).

5. The linear gear shift mechanism for chainless vehicles of claim 1, wherein the axial power input rotator (2) and the axial power output rotator (3) are disposed on two opposite sides of the transmission balls (12), respectively, to movably clamp the transmission balls (12) between the inward-tilted power input annular surface (21), the inward-tilted power input annular surface (31) and an outer circumferential surface of the support rotator (11), with the cylindrical receiving portion (121) being a cylindrical receiving recess (1211), wherein the inward ends of the driving posts (13) are movably disposed in the cylindrical receiving recesses (1211), respectively, along the radial direction of the support rotator (11), wherein the gear shift unit (1) has a driving ring (14), wherein outward ends of the driving posts (13) are pivotally connected to the driving ring (14), and the driving ring (14) moves along the axial direction of the support rotator (11).

6. The linear gear shift mechanism for chainless vehicles of claim 5, wherein the gear shift unit (1) has a driving screw for penetrating and meshing with the driving ring (14) and at least a guiding rod for movably penetrating the driving ring (14).

7. The linear gear shift mechanism for chainless vehicles of claim 1, wherein the gear shift unit (1) has a driving ring (14) and a limitator (8), with a plurality of oblique guide slots (144) disposed on an inward annular surface of the driving ring (14), wherein the limitator (8) has a plurality of axial limiting through holes surrounding an axis of the support rotator (11), wherein an axial guide opening and an axial curved guide slot are disposed on a radial outward side and a radial inward side of each axial limiting through hole, respectively, wherein the driving ring (14) are movably disposed outside the limitator (8), wherein the transmission balls (12) are movably confined to the axial limiting through holes, respectively, wherein two opposite sides of the transmission balls (12) are exposed from two opposite sides of the axial limiting through holes, wherein the cylindrical receiving portions (121) are each a cylindrical receiving channel, wherein the inward ends of the driving posts (13) movably penetrate the cylindrical receiving channels along the radial direction of the support rotator (11) so as to be movably disposed in the axial curved guide slots, respectively, wherein the outward ends of the driving posts (13) are movably disposed in the oblique guide slots (144) through the axial guide openings (82), respectively, wherein the axial power input rotator (2) and the axial power output rotator (3) are positioned on a same side of the transmission balls (12), wherein the support rotator (11) is positioned beside the transmission balls (12) in a manner to be opposite to the axial power input rotator (2) and the axial power output rotator (3), such that the transmission balls (12) are movably clamped between the inward-tilted power input annular surface (21), the inward-tilted power input annular surface (31) and a lateral annular surface (112) of the support rotator (11), thereby allowing the driving ring (14) to rotate about the limitator (8) by the axis of the support rotator (11).

8. The linear gear shift mechanism for chainless vehicles of claim 1, wherein the gear shift unit (1) has a driving ring (14), and the cylindrical receiving portions (121) are each a cylindrical receiving recess (1211), wherein the inward ends of the driving posts (13) are movably disposed in the cylindrical receiving recesses (1211), respectively, along the radial direction of the support rotator (11), wherein the outward ends of the driving posts (13) are pivotally connected to the driving ring (14), wherein the axial power input rotator (2) and the axial power output rotator (3) are positioned on a same side of the transmission balls (12), wherein the support rotator (11) is positioned beside the transmission balls (12) in a manner to be opposite to the axial power input rotator (2) and the axial power output rotator (3), such that the transmission balls (12) are movably clamped between the inward-tilted power input annular surface (21), the inward-tilted power input annular surface (31) and a lateral annular surface (112) of the support rotator (11), thereby allowing the driving ring (14) to move along the axial direction of the support rotator (11).

9. The linear gear shift mechanism for chainless vehicles of claim 1, further comprising a spur gear (52) whereby the axial power output spur gear (32) meshes with the axial power transfer spur gear (511).

## Patentansprüche

1. Linearer Schaltgetriebemechanismus für kettenlose Fahrzeuge, umfassend:
eine Schaltgetriebeeinheit (1) mit einem Stützrotator (11), einer Vielzahl von Übertragungskugeln (12) und einer Vielzahl von Mitnehmerstäben (13), wobei die Übertragungskugeln (12) voneinander beabstandet und beweglich auf dem Stützrotator (11) angeordnet sind, mit einem zylindrischen Aufnahmeabschnitt (121), der auf jeder der Übertragungskugeln (12) entlang einer radialen Richtung derselben angeordnet ist, wobei sich die Mitnehmerstäbe (13) von der radialen Richtung des Stützrotators (11) drehen, bis zu einer axialen Richtung des Stützrotators (11) jedoch nicht gelangen, **dadurch gekennzeichnet, dass** die Mitnehmerstäbe (13) nach innen gerichtete Enden aufweisen, die jeweils in der zylindrischen Aufnahmeabschnitte (121) entlang einer radialen Richtung des Stützrotators (11) angeordnet sind,
einen axialen Leistungseingangsrotator (2), der jeweils eine nach innen geneigte ringförmige Leistungseingangsfläche (21), entlang einer axialen Richtung des Stützrotators (11) angeordnet ist,
einen axialen Leistungsabgaberotator (3), der eine nach innen geneigte ringförmige Leistungseingangsfläche (31) aufweist und entlang der axialen Richtung des Stützrotators (11) Leistung abgibt, wobei die Übertragungskugeln (12) zwischen der nach innen geneigten ringförmigen Leistungseingangsfläche (21), der nach innen geneigten ringförmigen Leistungseingangsfläche (31) und dem Stützrotator (11) beweglich geklemmt sind,
eine von der Lauffläche benötigte transversale Leistungsquelle (4) zum Ineinandergreifen mit dem axialen Leistungseingangsrotator (2), wobei die von der Lauffläche benötigte transversale Leistungsquelle(4) ein transversales Leistungskegelrad (42) aufweist, und der axiale Leistungseingangsrotator (2) ein axiales Leistungseingangskegelrad (22) aufweist, so dass das transversale Leistungskegelrad (42) mit dem axialen Leistungseingangskegelrad (22) in Eingriff steht,
einen axialen Leistungsübertragungsabschnitt (5) zum Ineinandergreifen mit dem axialen Leistungsabgaberotator (3), wobei der axiale Leistungsabgaberotator (3) ein axiales Leistungsabgabestirnrad (32) aufweist und der axiale Leistungsübertragungsabschnitt (5) ein axiales Leistungsübertragungsstirnrad (511) aufweist, so dass das axiale Leistungsabgabestirnrad (32) mit dem axialen Leistungsübertragungsstirnrad (511) in Eingriff steht, und
einen transversalen Leistungsabgabeabschnitt (6) zum Ineinandergreifen mit dem axialen Leistungsübertragungsabschnitt (5), wobei der transversale Leistungsabgabeabschnitt (6) ein transversales Leistungsabgabekegelrad (61) aufweist, und der axiale Leistungsübertragungsabschnitt (5) ein axiales Leistungsübertragungskegelrad (512) aufweist, so dass das transversale Leistungsabgabekegelrad (61) mit dem axialen Leistungsübertragungskegelrad (512) in Eingriff steht.

2. Linearer Schaltgetriebemechanismus für kettenlose Fahrzeuge nach Anspruch 1, ferner umfassend eine Hilfsstromquelle (7) zum Ineinandergreifen mit der von der Lauffläche benötigten transversalen Leistungsquelle (4).

3. Linearer Schaltgetriebemechanismus für kettenlose Fahrzeuge nach Anspruch 2, wobei die Hilfsstromquelle (7) ein Hilfsleistungskegelrad (711) aufweist und die von der Lauffläche benötigte transversale Leistungsquelle (4) ein transversales Leistungskegelrad (42) aufweist, so dass das Hilfsleistungskegelrad (711) mit dem transversalen Leistungskegelrad (42) in Eingriff steht.

4. Linearer Schaltgetriebemechanismus für kettenlose Fahrzeuge nach Anspruch 2, wobei die Hilfsstromquelle (7) entlang einer der radialen Richtung und der axialen Richtung des Stützrotators (11) angeordnet ist.

5. Linearer Schaltgetriebemechanismus für kettenlose Fahrzeuge nach Anspruch 1, wobei der axiale Leistungseingangsrotator (2) und der axiale Leistungsabgaberotator (3) auf zwei gegenüberliegenden Seiten der Übertragungskugeln (12) angeordnet sind, um die Übertragungskugeln (12) zwischen der nach innen geneigten ringförmigen Leistungseingangsfläche (21), der nach innen geneigten ringförmigen Leistungseingangsfläche (31) und einer äußeren Umfangsfläche des Trägerrotators (11) beweglich zu klemmen, wobei der zylindrische Aufnahmeabschnitt (121) eine zylindrische Aufnahmeaussparung (1211) ist, wobei die nach innen gerichteten Enden der Mitnehmerstäbe (13) jeweils entlang der radialen Richtung des Stützrotators (11) in den zylindrischen Aufnahmeaussparungen (1211) beweglich angeordnet sind, wobei die Schaltgetriebeeinheit (1) einen Antriebsring (14) aufweist, wobei die nach außen gerichteten Enden der Mitnehmerstäbe (13) schwenkbar mit dem Antriebsring (14) verbunden sind und sich der Antriebsring (14) entlang der axialen Richtung des Stützrotators (11) bewegt.

6. Linearer Schaltmechanismus für kettenlose Fahrzeuge nach Anspruch 5, wobei die Schaltgetriebeeinheit (1) eine Antriebsschraube zum Eindringen und Ineinandergreifen mit dem Antriebsring (14) und mindestens eine Führungsstange zum beweglichen Eindringen in den Antriebsring (14) aufweist.

7. Linearer Schaltgetriebemechanismus für kettenlose Fahrzeuge nach Anspruch 1, wobei die Schaltgetriebeeinheit (1) einen Antriebsring (14) und einen Begrenzer (8) aufweist, mit einer Vielzahl von schrägen Führungsschlitzen (144), die auf einer nach innen gerichteten ringförmigen Oberfläche des Antriebsrings (14) angeordnet sind, wobei der Begrenzer (8) eine Vielzahl von axialen Begrenzungsdurchgangsbohrungen aufweist, die eine Achse des Stützrotators (11) umgeben, wobei eine axiale Führungsöffnung und ein axial gekrümmter Führungsschlitz auf einer radialen nach außen gerichteten Seite und einer radialen nach innen gerichteten Seite jeder axialen Begrenzungsdurchgangsbohrung angeordnet sind, wobei der Antriebsring (14) außerhalb des Begrenzers (8) beweglich angeordnet ist, wobei die Übertragungskugeln (12) jeweils beweglich auf die axialen Begrenzungsdurchgänge begrenzt sind, wobei zwei gegenüberliegende Seiten der Übertragungskugeln (12) von zwei gegenüberliegenden Seiten der axialen Begrenzungsdurchgangsbohrungen freiliegen, wobei die zylindrischen Aufnahmeabschnitte (121) jeweils ein zylindrischer Aufhahmekanal sind, wobei die nach innen gerichteten Enden der Mitnehmerstäbe (13) in die zylindrischen Aufnahmekanäle entlang der radialen Richtung des Stützrotators (11) beweglich eindringen, um jeweils in den axial gekrümmten Führungsschlitzen beweglich angeordnet zu sein, wobei die nach außen gerichteten Enden der Mitnehmerstäbe (13) jeweils in den schrägen Führungsschlitzen (144) durch die axialen Führungsöffnungen (82) beweglich angeordnet sind, wobei der axiale Leistungseingangsrotator (2) und der axiale Leistungsabgaberotator (3) auf einer selben Seite der Übertragungskugeln (12) positioniert sind, wobei der Stützrotator (11) neben den Übertragungskugeln (12) in einer Weise positioniert ist, die dem axialen Leistungseingangsrotator (2) und dem axialen Leistungsabgaberotator (3) gegenüberliegt, so dass die Übertragungskugeln (12) beweglich zwischen der nach innen geneigten ringförmigen Leistungseingangsfläche (21), der ringförmigen nach innen geneigten Leistungseingangsfläche (31) und einer seitlichen ringförmigen Fläche (112) des Stützrotators (11) geklemmt sind, wodurch sich der Antriebsring (14) um den Begrenzer (8) durch die Achse des Stützrotators (11) drehen kann.

8. Linearer Schaltgetriebemechanismus für kettenlose Fahrzeuge nach Anspruch 1, wobei die Schaltgetriebeeinheit (1) einen Antriebsring (14) aufweist und die zylindrischen Aufnahmeabschnitte (121) jeweils eine zylindrische Aufnahmeaussparung (1211) sind, wobei die nach innen gerichteten Enden der Mitnehmerstäbe (13) jeweils beweglich in den zylindrischen Aufnahmeaussparungen (1211) entlang der radialen Richtung des Stützrotators (11) angeordnet sind, wobei die nach außen gerichteten Enden der Mitnehmerstäbe (13) schwenkbar mit dem Antriebsring (14) verbunden sind, wobei der axiale Leistungseingangsrotator (2) und der axiale Leistungsabgaberotator (3) auf einer selben Seite der Übertragungskugeln (12) angeordnet sind, wobei der Stützrotator (11) neben den Übertragungskugeln (12) so positioniert ist, dass er dem axialen Leistungseingangsrotator (2) und dem axialen Leistungsabgaberotator (3) gegenüberliegt, so dass die Übertragungskugeln (12) beweglich zwischen der nach innen geneigten ringförmigen Leistungseingangsfläche (21), der nach innen geneigten ringförmigen Leistungseingangsfläche (31) und einer seitlichen Ringfläche (112) des Stützrotators (11) geklemmt sind, wodurch sich der Antriebsring (14) entlang der axialen Richtung des Stützrotators (11) bewegen kann.

9. Linearer Schaltgetriebemechanismus für kettenlose Fahrzeuge nach Anspruch 1, ferner umfassend ein Stirnrad (52), wobei das axiale Leistungsabgabestirnrad (32) mit dem axialen Leistungsübertragungsstirnrad (511) in Eingriff steht.

## Revendications

1. Mécanisme de changement de vitesse linéaire pour véhicules sans chaîne, comprenant :
une unité de changement de vitesse (1) dotée d'un rotateur de support (11), d'une pluralité de billes de transmission (12) et d'une pluralité de montants d'entraînement (13), les billes de transmission (12) étant distantes les unes des autres et disposées de façon mobile sur le rotateur de support (11), une partie de réception cylindrique (121) étant disposée sur chacune desdites billes de transmission (12) le long de la direction radiale, où les montants d'entraînement (13) tournent à partir de la direction radiale du rotateur de support (11) afin de ne pas atteindre une direction axiale du rotateur de support (11) ; **caractérisé en ce que**
les montants d'entraînement (13) présentent des extrémités intérieures disposées de façon mobile dans les parties de réception cylindriques (121), respectivement, le long d'une direction radiale du rotateur de support (11) ;
un rotateur d'entrée de puissance axiale (2) ayant une surface annulaire d'entrée de puissance inclinée vers l'intérieur (21) et introduisant de la puissance le long de la direction axiale du rotateur de support (11) ;
un rotateur de sortie de puissance axiale (3) ayant une surface annulaire d'entrée de puissance inclinée vers l'intérieur (31) et délivrant de la puissance le long de la direction axiale du rotateur de support (11), où les billes de transmission (12) sont serrées de façon mobile entre la surface annulaire d'entrée de puissance inclinée vers l'intérieur (21), la surface annulaire d'entrée de puissance inclinée vers l'intérieur (31) et le rotateur de support (11) ;
une source de puissance transversale à bande de roulement (4) destinée à être en prise avec le rotateur d'entrée de puissance axiale (2), où la source de puissance transversale à bande de roulement (4) présente un engrenage conique de puissance transversale (42), et le rotateur d'entrée de puissance axiale (2) présente un engrenage conique d'entrée de puissance axiale (22), de sorte que l'engrenage conique de puissance transversale (42) est en prise avec l'engrenage conique d'entrée de puissance axiale (22) ;
une partie de transfert de puissance axiale (5) destinée à être en prise avec le rotateur de sortie de puissance axiale (3), où le rotateur de sortie de puissance axiale (3) présente un engrenage droit de sortie de puissance axiale (32), et la partie de transfert de puissance axiale (5) présente un engrenage droit de transfert de puissance axiale (511), tel que l'engrenage droit de sortie de puissance axiale (32) est en prise avec l'engrenage droit de transfert de puissance axiale (511) ; et une partie de sortie de puissance transversale (6) destinée à être en prise avec la partie de transfert de puissance axiale (5), où la partie de sortie de puissance transversale (6) présente un engrenage conique de sortie de puissance transversal (61), et la partie de transfert de puissance axiale (5) présente un engrenage conique de transfert de puissance axiale (512), tel que l'engrenage conique de sortie de puissance transversale (61) est en prise avec l'engrenage conique de transfert de puissance axiale (512).

2. Mécanisme de changement de vitesse linéaire pour véhicules sans chaîne selon la revendication 1, comprenant en outre une source de puissance auxiliaire (7) destinée à être en prise avec la source de puissance transversale à bande de roulement (4).

3. Mécanisme de changement de vitesse linéaire pour véhicules sans chaîne selon la revendication 2, où la source de puissance auxiliaire (7) présente un engrenage conique de puissance auxiliaire (711), et la source de puissance transversale à bande de roulement (4) présente un engrenage conique de puissance transversale (42), de sorte que l'engrenage conique de puissance auxiliaire (711) est en prise avec l'engrenage conique de puissance transversale (42).

4. Mécanisme de changement de vitesse linéaire pour véhicules sans chaîne selon la revendication 2, où la source de puissance auxiliaire (7) est disposée le long d'une entre la direction radiale et la direction axiale du rotateur de support (11).

5. Mécanisme de changement de vitesse linéaire pour véhicules sans chaîne selon la revendication 1, où le rotateur d'entrée de puissance axiale (2) et le rotateur de sortie de puissance axiale (3) sont disposés sur deux côtés opposés des billes de transmission (12), respectivement, pour serrer de façon mobile les billes de transmission (12) entre la surface annulaire d'entrée de puissance inclinée vers l'intérieur (21), la surface annulaire d'entrée de puissance inclinée vers l'intérieur (31) et une surface circonférentielle extérieure du rotateur de support (11), la partie de réception cylindrique (121) étant un évidement de réception cylindrique (1211), où les extrémités intérieures des montants d'entraînement (13) sont disposées de façon mobile dans les évidements de réception cylindriques (1211), respectivement, le long de la direction radiale du rotateur de support (11), où l'unité de changement de vitesse (1) comporte une bague d'entraînement (14), où les extrémités extérieures des montants d'entraînement (13) sont reliées de manière pivotante à la bague d'entraînement (14), et la bague d'entraînement (14) se déplace le long de la direction axiale du rotateur de support (11).

6. Mécanisme de changement de vitesse linéaire pour véhicules sans chaîne selon la revendication 5, où l'unité de changement de vitesse (1) comporte une vis d'entraînement pour pénétrer dans, et être en prise avec la bague d'entraînement (14) et au moins une tige de guidage pour pénétrer de manière mobile dans la bague d'entraînement (14).

7. Mécanisme de changement de vitesse linéaire pour véhicules sans chaîne selon la revendication 1, où l'unité de changement de vitesse (1) comporte une bague d'entraînement (14) et un limiteur (8), avec une pluralité de fentes de guidage obliques (144) disposées sur une surface annulaire intérieure de la bague d'entraînement (14) ; où le limiteur (8) présente une pluralité de trous traversants axiaux de limitation entourant un axe du rotateur de support (11); où une ouverture de guidage axiale et une fente de guidage axiale incurvée sont disposées sur un côté extérieur radial et un côté intérieur radial de chaque trou traversant axial de limitation, respectivement ; où la bague d'entraînement (14) est disposée de façon mobile à l'extérieur du limiteur (8) ; où les billes de transmission (12) sont confinées de façon mobile aux trous traversants axiaux de limitation, respectivement ; où deux côtés opposés des billes de transmission (12) sont exposés depuis deux côtés opposés des trous traversants axiaux de limitation ; où les parties de réception cylindriques (121) sont chacune un canal de réception cylindrique ; où les extrémités intérieures des montants d'entraînement (13) pénètrent de façon mobile dans les canaux de réception cylindriques le long de la direction radiale du rotateur de support (11), de sorte à être disposées de manière mobile dans les fentes de guidage axiales incurvées, respectivement ; où les extrémités extérieures des montants d'entraînement (13) sont disposées de façon mobile dans les fentes de guidage obliques (144) à travers les ouvertures de guidage axiales (82), respectivement ; où le rotateur d'entrée de puissance axiale (2) et le rotateur de sortie de puissance axiale (3) sont positionnés sur un même côté des billes de transmission (12) ; où le rotateur de support (11) est positionné à côté des billes de transmission (12) de sorte à être opposé au rotateur d'entrée de puissance axiale (2) et au rotateur de sortie de puissance axiale (3), de sorte que les billes de transmission (12) sont serrées de façon mobile entre la surface annulaire d'entrée de puissance inclinée vers l'intérieur (21), la surface annulaire d'entrée de puissance inclinée vers l'intérieur (31) et une surface annulaire latérale (112) du rotateur de support (11), permettant ainsi à la bague d'entraînement (14) de tourner autour du limiteur (8) de l'axe du rotateur de support (11).

8. Mécanisme de changement de vitesse linéaire pour véhicules sans chaîne selon la revendication 1, où l'unité de changement de vitesse (1) présente une bague d'entraînement (14), et les parties de réception cylindriques (121) sont chacune un évidement de réception cylindrique (1211), où les extrémités intérieures des montants d'entraînement (13) sont disposés de façon mobile dans les évidements de réception cylindriques (1211), respectivement, le long de la direction radiale du rotateur de support (11), où les extrémités extérieures des montants d'entraînement (13) sont reliées de façon pivotante à la bague d'entraînement (14), où le rotateur d'entrée de puissance axiale (2) et le rotateur de sortie de puissance axiale (3) sont positionnés sur un même côté des billes de transmission (12), où le rotateur de support (11) est positionné à côté des billes de transmission (12), de sorte à être opposé au rotateur d'entrée de puissance axiale (2) et au rotateur de sortie de puissance axiale (3), de sorte que les billes de transmission (12) sont serrées de façon mobile entre la surface annulaire d'entrée de puissance inclinée vers l'intérieur (21), la surface annulaire d'entrée de puissance inclinée vers l'intérieur (31) et une surface annulaire latérale (112) du rotateur de support (11), permettant ainsi à la bague d'entraînement (14) de se déplacer le long de la direction axiale du rotateur de support (11).

9. Mécanisme de changement de vitesse linéaire pour véhicules sans chaîne selon la revendication 1, comprenant en outre un engrenage droit (52) dans lequel l'engrenage droit de sortie de puissance axiale (32) est en prise avec l'engrenage droit de transfert de puissance axiale (511).
